# EUROPÄISCHE PATENTSCHRIFT

(11) **EP 3 724 073 B1**
(45) Veröffentlichungstag und Bekanntmachung des Hinweises auf die Patenterteilung: **01.04.2026**
(21) Anmeldenummer: 18842512.8
(22) Anmeldetag: 13.12.2018
(51) Int. Cl.: B64U 80/25, B64U 70/97, B64U 70/99, B64U 10/13

(54) **LADESTATION UND LADEVERBUNDSTATION**
CHARGING STATION AND GROUP OF CHARGING STATIONS
STATION DE CHARGE ET GROUPE DE STATIONS DE CHARGE

(30) Priorität: 15.12.2017 DE 102017130251; 15.12.2017 DE 102017130252; 15.12.2017 DE 102017130253; 15.12.2017 DE 102017130255; 15.12.2017 DE 102017130254
(43) Veröffentlichungstag der Anmeldung: 21.10.2020
(73) Patentinhaber: GermaniumTech GmbH, 01328 Dresden (DE)
(72) Erfinder: WERNER, Jens, 01723 Wilsdruff STT Kesselsdorf (DE); PEZUS, Phil, 01723 Wilsdruff STT Kesselsdorf (DE); BIELER, Matthias, 01723 Wilsdruff STT Kesselsdorf (DE); FRANKE, Florian, 01723 Wilsdruff STT Kesselsdorf (DE)
(74) Vertreter: Lippert Stachow Patentanwälte Rechtsanwälte Partnerschaft mbB
(86) Internationale Anmeldenummer: PCT/DE2018/101021
(87) Internationale Veröffentlichungsnummer: WO 2019/114888

(56) Entgegenhaltungen:
- WO-A1-2017/081550
- CN-A- 107 176 047
- US-A1- 2016 009 413
- US-A1- 2016 244 187
- US-A1- 2016 364 989
- US-B1- 9 527 605
- US-B2- 9 505 493

## Beschreibung

Die Erfindung betrifft eine Ladestation für ein senkrecht startendes und landendes Fluggeräts sowie eine Ladeverbundstation.

Fluggeräte zum Transport von Personen und/oder Lasten gewinnen zunehmend an Bedeutung, da sie eine schnelle Beförderung weitgehend unabhängig von Infrastruktureinrichtungen, wie z. B. Straßen, Schienen, Brücken, Tunnel usw., ermöglichen. Insbesondere trifft dies auf kleinere Fluggeräte zu, die senkrecht starten und landen können und daher keine Start- und Landebahn benötigen.

Aus der WO 2013/124300 ist beispielsweise ein Fluggerät bekannt, dass mehrere in einer Fläche angeordnete Propeller und diesen zugeordnete Elektromotoren aufweist. Zur Versorgung der Elektromotoren sind in der Rahmenstruktur des Fluggerätes ein Energiespeicher, z. B. Akkumulatoren, Superkondensator oder Brennstoffzellen vorhanden. Zudem ist ein Energiewandler zum Bereitstellen elektrischer Energie vorgesehen, bei dem es sich beispielsweise um einen Verbrennungsmotor mit Generator oder ein anderer Energiewandler, wie z. B. ein Range Extender, handeln kann, welche die Energiespeicher während des Fluges nachlädt. US 9 505 493 B2 offenbart ein System zur Erleichterung der automatisierten Landung und des automatisierten Starts eines autonomen oder pilotgesteuerten schwebenden Luftfahrzeugs mit einem kooperativen Unterboden an einem stationären oder mobilen Landeplatz und ein automatisiertes Speichersystem, das in Verbindung mit dem Lande- und Startmechanismus verwendet wird und eine Vielzahl von UAVs speichert und wartet.

Nachteilig hierbei ist, dass die Energiespeicher, der Energiewandler und der benötigte Kraftstoff für den Energiewandler die Masse des Fluggeräts erhöhen und somit die Flugeigenschaften des Fluggerätes beeinträchtigen und den Energieverbrauch des Fluggerätes erhöhen.

Zudem stellen der Energiewandler und der Kraftstoff eine Gefahrenquelle und damit ein Sicherheitsrisiko dar. Zudem ist die Energieeffizienz eingeschränkt, da eine dezentrale Umwandlung von Kraftstoff in elektrische Energie und deren Speicherung vorgesehen ist. Eine Nutzung von elektrischer Energie aus regenerativer Energiequellen ist nicht oder nur eingeschränkt, allenfalls bei einer Bereitstellung von Kraftstoff aus nachwachsenden Rohstoffen, möglich.

Aufgabe der Erfindung ist es daher, eine Möglichkeit anzugeben, mit der ein Laden der Energiespeicher eines Fluggeräts einfach, schnell und sicher ermöglicht wird und der Energieverbrauch des Fluggeräts gesenkt wird. Wünschenswert wäre es zudem, ein Laden mittels regenerativer Energiequellen zu ermöglichen.

Gelöst wird diese Aufgabe durch die Gegenstände der unabhängigen Ansprüche. Vorteilhafte Weiterbildungen der Erfindung sind in den Unteransprüchen angegeben.

Eine erfindungsgemäße Ladestation für ein senkrecht startendes und landendes Fluggerät, welches ein oder mehrere Energiespeicher aufweist, weist eine Ladeeinrichtung zur Übertragung elektrischer Energie an den oder die Energiespeicher, z. B**.** wiederaufladbare Akkumulatoren oder Superkondensatoren, des Fluggeräts auf.

Das Fluggerät kann zum Zwecke des elektrischen Aufladens des oder der Energiespeicher an oder auf der Ladestation landen und nach Beendigung des Ladevorgangs von der Ladestation aus wieder starten.

Bevorzugt ist die Ladestation als stationäre Ladestation, d. h. als ortsfeste Ladestation, ausgebildet. Die Ladestation kann jedoch auch als mobile, ortsveränderliche Ladestation ausgebildet sein, z. B. indem sie mittels einer Fördereinrichtung beweglich ausgebildet ist.

Die Ladestation kann in eine Start-Landestation für ein senkrecht startendes und landendes Fluggerät zum Transport von Personen und/oder Lasten oder in ein anderes Transport-/und Logistiksystem für Fluggeräte integriert sein oder in unmittelbare Nähe zu einer Start-Landestation oder zu einem Transport-/und Logistiksystem angebunden sein.

Bevorzugt kann die Ladestation in bestehende Infrastruktur, wie z. B. in Gebäude, verkehrstechnische Objekte, wie Haltestellen, oder Straßenbeleuchtung, integriert oder an diese angebunden sein.

Das senkrecht startende und landende, sog. VTOL (engl. Vertical Take-Off and Landing) Fluggerät ist zum Transport von Personen und/oder Lasten ausgebildet. Hierfür kann das Fluggerät ein entsprechendes Transportmodul aufweisen.

Für den Antrieb des senkrecht startenden und landenden Fluggerätes kann es ein entsprechendes Flugmodul aufweisen.

Das Transportmodul ist an- und abkuppelbar mit dem Flugmodul verbunden. Das Flugmodul kann somit autark flugfähig und wahlweise mit verschiedenen Transportmodulen verbunden sein. Bei einer derartigen modularen Aufbauweise des Fluggerätes kann die Ladestation gemäß verschiedenen Ausführungsvarianten für ein Flugmodul des Fluggerätes ausgebildet sein, wobei die Ladeeinrichtung zur Übertragung elektrischer Energie an den oder die Energiespeicher des Flugmoduls ausgebildet sind.

Somit kann ein Flugmodul des Fluggeräts autark an oder auf der Ladestation landen, die Energiespeicher des Flugmoduls elektrisch aufgeladen werden und das Flugmodul wieder starten. Bevorzugt weist die Ladestation eine Ladeplattform auf, auf welcher während des Ladens das Fluggerät abgestellt oder das Flugmodul gelagert ist.

Auf oder an der Ladeplattform kann die Ladeeinrichtung befestigt sein. Die Ladeplattform kann beispielsweise mindestens die räumliche Ausdehnung des Fluggerätes bzw. Flugmoduls aufweisen.

Die Ladestation kann bevorzugt so ausgebildet und angeordnet sein, dass sie aus mehreren Richtungen zugänglich ist. Beispielsweise kann die Ladestation als Aufbau auf Lichtmasten, Säulen oder Dächern ausgebildet sein. Hierdurch kann die Ladestation aus verschiedenen horizontalen und vertikalen Richtungen erreicht werden, d. h. das Fluggerät bzw. das Flugmodul kann sich der Ladestation aus unterschiedlichen Richtungen nähern und auf der Ladestation landen sowie in unterschiedliche Richtungen von der Ladestation aus starten. Ein zeitaufwändiger Lande- oder Startvorgang unter Nutzung vorgegebener Flugkorridore kann vermieden werden.

Die Ladestation aufweist eine oder mehrere Positionierungseinrichtung(en) zum Halten, Fixieren und Ausrichten des Fluggeräts, beispielsweise zum Halten, Fixieren und Ausrichten eines Flugmoduls des Fluggeräts. Die Positionierungseinrichtung(en) können auf oder an der Ladeplattform befestigt sein. Das Landen des Fluggerätes bzw. des Flugmoduls kann optional so ausgeführt werden, dass das Fluggerät bzw. das Flugmodul sich der Ladestation annähert und bei Erreichen eines vorgegebenen Annäherungspunktes von der oder den Positionierungseinrichtungen der Ladestation erfasst wird.

Die Positionierungseinrichtung(en) aufweisen eine oder mehrere Ausleger mit Greifer- und/oder Auflagervorrichtungen beispielsweise in Form von beweglichen Greifarmen, z. B. balkenförmigen, ein - oder mehrgliedrigen Greifarmen, in der Art von variablen Lineareinheiten oder ähnlichen mehrachsig agierenden, mechanischen Konstruktionen (wie z.B. Industrieroboter).

Optional können die Positionierungseinrichtung(en) variabel bezüglich ihrer Länge ausgebildet, d. h. ausfahrbar, sein. Eine Längenvariation kann beispielsweise durch teleskopartiges Ineinanderverschieben mehrerer Segmente der Positionierungseinrichtung erreicht werden. Dadurch wird eine Anpassung an Fluggeräte bzw. Flugmodule unterschiedlicher geometrischer Ausgestaltung ermöglicht, so dass verschiedene Fluggeräte bzw. Flugmodule erfasst, ausgerichtet und auf der Ladeplattform der Ladestation abgestellt werden können. Alternativ oder kumulativ zur Verwendung einer Ladeplattform können Greifer- und/oder Auflagervorrichtungen der Positioniereinrichtung als Auflager und zur Fixierung des Fluggerätes bzw. des Flugmoduls dienen.

Mittels der Positionierungseinrichtung(en) kann das Fluggerät bzw. das Flugmodul zudem so ausgerichtet werden, dass eine Verbindung mit der Ladeeinrichtung ermöglicht wird.

Nach dem Beenden des Ladevorgangs kann das Fluggerät bzw. das Flugmodul direkt von der Ladeplattform oder von den Greifer- und/oder Auflagervorrichtungen der Positioniereinrichtung aus starten.

Alternativ können in oder an der Ladestation Fluggerät bzw. Flugmodule zwischengelagert werden, z. B. in Vorbereitung oder Nachbereitung eines Ladevorganges.

Die Positionierungseinrichtung(en) können bevorzugt derart angeordnet sein, dass diese schräg nach oben verlaufen, so dass ein Sicherheitsabstand zwischen dem positionierten Fluggerät bzw. Flugmodul und der Standfläche der Ladestation hergestellt wird. Beispielsweise können die Positionierungseinrichtung(en) in einem Winkel von ca. 45 ° aufwärts verlaufen.

In einer Ladestation, die insbesondere zum Laden der elektrischen Energiespeicher eines Flugmoduls des Fluggeräts geeignet ist, kann mittels der Positioniereinrichtung(en) eine Tragwerksstruktur des Flugmoduls erfasst werden.

Das Flugmodul aufweist mehrere an einer Tragwerksstruktur angeordnete Antriebseinheiten, wobei die Tragwerksstruktur an Knotenpunkten miteinander verbundene Tragwerksbalken aufweist und jede Antriebseinheit einen Elektromotor und einen mit dem Elektromotor in einer Wirkverbindung stehenden Propeller aufweisen kann. Die Antriebseinheiten können optional in einer Ebene angeordnet sein.

Die Tragwerksstruktur kann radial, axial und tangential angeordnete, vorzugweise gerade oder gekrümmte Tragwerksbalken aufweisen, die beispielsweise mittels der Tragwerksstruktur zugeordneten Verbindungsstücken, z. B. T-Stücken, an Knotenpunkten miteinander und ggf. mit einer mittig in der Tragwerksstruktur angeordneten Zentraleinheit verbunden sein können.

Die Tragwerksbalken können beispielsweise so angeordnet sein, dass eine ebene, hexagonal verstrebte Tragwerksstruktur ausgebildet ist. Dazu können sechs radial gleichmäßig verteilt angeordnete Tragwerksbalken vorgesehen sein, so dass zwei benachbarte radial angeordnete Tragwerksbalken einen Winkel von ungefähr 60 ° einschließen.

Das Flugmodul kann eine Zentraleinheit aufweisen, die bevorzugt mittig angeordnet sein kann. Die Zentraleinheit kann beispielsweise ein Gehäuse, z. B. in Form einer Halbkugel oder eines Ellipsoids, aufweisen. Beispielsweise kann die Zentraleinheit aus zwei miteinander verbundenen, z. B. verschraubten, Hälften ausgebildet sein. Zur Wartung und Durchführung kleinerer Reparaturen können Eingriffe vorgesehen sein. Die Zentraleinheit kann zudem zur Aufnahme von Tragwerksbalken der Tragwerksstruktur ausgebildet sein, z. B. indem Tragwerksbalken der Tragwerksstruktur mit einem Ende an der Zentraleinheit befestigt sind und von der Zentraleinheit radial nach außen verlaufen.

Die Zentraleinheit kann technische Funktionseinheiten, wie z. B. Steuerungs-, Lagebestimmungs- und/oder Kommunikationstechnik und/oder ein Lademodul aufweisen. Ein integriertes Lademodul kann Energiespeicher, z. B. in Form von wiederaufladbaren Akkumulatoren oder Superkondensatoren, eine Ladeeinrichtung und/oder Solarzellen aufweisen. Die Ladeeinrichtung kann zur Übertragung von elektrischer Energie von einer externen Ladestation, beispielsweise der erfindungsgemäßen Ladestation, in den/die Energiespeicher ausgebildet sein.

Das Flugmodul kann eine Kupplungseinrichtung zur Verbindung des Transportmoduls mit dem Flugmodul aufweisen. Mit anderen Worten ist die Kupplungseinrichtung zum An- und Abkuppeln eines Transportmoduls ausgebildet. Bevorzugt kann die Kupplungseinrichtung mittig an der Zentraleinheit angeordnet sein.

Diese Kupplungseinrichtung kann auch zur elektrischen Verbindung des Flugmoduls mit einer Ladeeinrichtung der Ladestation genutzt werden.

Die Ladeeinrichtung der erfindungsgemäßen Ladestation dient der Übertragung elektrischer Energie an die Energiespeicher des Fluggerätes bzw. Flugmoduls. Sie kann zu diesem Zweck stromleitende Kabel mit geeigneten Elektroanschlüssen, z.B. steckbare/kuppelbare Medienverbindung, aufweisen. Alternativ oder zusätzlich kann die Ladeeinrichtung zum induktiven Laden des Fluggeräts bzw. Flugmoduls ausgebildet sein.

Die Ladeeinrichtung kann von einer zentralen, d. h. mittigen Stelle der Ladestation aus mit dem Fluggerät bzw. mit dem Flugmodul verbunden werden.

Soll die Kupplungseinrichtung des Flugmoduls zur elektrischen Verbindung mit der Ladeeinrichtung genutzt werden können, kann die Kupplungseinrichtung zur elektrischen Anbindung der Ladeeinrichtung der Ladestation ausgebildet sein und die Ladeeinrichtung der Ladestation kann über ein entsprechendes Kupplungsgegenstück verfügen, welches mit der Kupplungseinrichtung des Flugmoduls kuppelbar ist, so dass die elektrische Energie an den /die Energiespeicher des Flugmoduls über die Kupplungseinrichtung übertragen und damit die Energiespeicher des Flugmoduls geladen werden können.

Nach verschiedenen Ausführungsvarianten kann die Ladeeinrichtung zur variablen Verbindung mit dem Fluggerät bzw. dem Flugmodul einen flexibel ausgebildeten Verbinder aufweisen.

Dadurch kann eine örtliche Anpassung des Anschlusses der Ladeeinrichtung ermöglicht werden, um Energiespeicher von Fluggeräten bzw. Flugmodulen unterschiedlicher geometrischer Ausgestaltung laden zu können.

Zur Ausbildung einer variablen Verbindung kann die Ladeeinrichtung als flexiblen Verbinder, z. B. einen teleskopartigen Ausleger mit mehreren Segmenten und beispielsweise innenliegendem Kabel, aufweisen. Durch das Ineinanderverschieben mehrerer Segmente des Auslegers kann z. B. eine Längenvariation des Verbinders der Ladeeinrichtung realisiert werden.

Zur Ausbildung einer weiteren variablen Verbindung kann die Ladeeinrichtung als flexiblen Verbinder ein Gelenk-Gestänge mit z. B. mehreren, gelenkig miteinander verbunden Gestängearmen aufweisen. Damit kann z. B. eine veränderliche Länge und Radius des Verbinders der Ladeeinrichtung realisiert werden.

Zur Ausbildung einer weiteren variablen Verbindung kann die Ladeeinrichtung als flexiblen Verbinder einen elastischen Schlauch mit beispielsweise innenliegendem Kabel aufweisen. Durch Auf- oder Abwickeln des Schlauches kann beispielsweise eine Längenvariation erfolgen.

Daneben kann der Verbinder über eine Gelenkverbindung an der zentralen Anbindestelle der Ladeeinrichtung an der Ladestation verfügen, um die Flexibilität der Anschlussmöglichkeiten an die Energiespeicher von Fluggeräten bzw. Flugmodulen weiter zu erhöhen.

Alternativ kann das Laden auch über Induktion erfolgen.

Neben der Übertragung elektrischer Energie kann die Ladeeinrichtung auch der Datenübertragung an das Fluggerät oder das Flugmodul dienen. Dazu kann die Ladeeinrichtung über ein Datenkabel verfügen.

Optional kann die Ladestation technische Funktionseinheiten, wie z. B. Steuerungs-, Lagebestimmungs- und/oder Kommunikationstechnik, aufweisen.

Die Lagebestimmungstechnik kann beispielsweise mittels Ortungssignalen, z. B. eines globalen Navigationssatellitensystems wie GPS, Galileo, GLONASS, Beidou etc., zur Positionsbestimmung der Flugmodule ausgebildet sein und der Ermittlung und Kontrolle der Flugroute und des Flugziels der Flugmodule dienen.

Die Lagebestimmungstechnik kann zudem Systeme enthalten, welche mittels Sensoren verschiedener Wirkprinzipien einzeln oder in Kombination (Optisch, Ultraschall, Induktion, Wirbelstrom) den Lande-/Startvorgang sowie das An- und Abkuppeln an die Ladestation unterstützen.

Die Kommunikationstechnik kann zur internen und/oder externen Kommunikation ausgebildet sein, wobei unter interner Kommunikation die Kommunikation mit Modulen, die direkt zur Verwendung mit der Ladestation vorgesehen sind, zu verstehen ist, also beispielsweise die Kommunikation zur Verständigung zwischen Fluggerät, Flugmodul und Ladestation.

Unter externer Kommunikation ist beispielsweise die Kommunikation bezüglich Flugerlaubnis, Flugroute, Standort etc. bei der Flugsicherung oder der Informationsaustausch mit Wetterdiensten zu verstehen.

Beispielsweise kann die Kommunikationstechnik zur Abgabe einer Meldung über den Zustand der Ladestation, z. B. Wartungs- oder Reparaturbedarf oder zur Meldung einer freien Ladestation ausgebildet sein.

Gemäß verschiedenen Ausführungsvarianten kann die Ladestation an ein Stromversorgungsnetz, vorzugsweise an ein Starkstromnetz, anschließbar sein. Hierbei kann eine Infrastrukturanbindung, also eine Anbindung an ein örtliches Stromversorgungsnetz genutzt werden und elektrische Energie unmittelbar aus dem Stromversorgungsnetz an die Energiespeicher übertragen werden. Je nach Einspeisungsquelle der elektrischen Energie in das Stromversorgungsnetz, z. B. Solarzellen oder Windräder, können somit regenerative Energiequelle zum Laden der Energiespeicher und anschließend zum Betrieb des Flugmoduls genutzt werden. Ein Anschluss an ein Starkstromnetz ermöglicht vorteilhaft ein besonders schnelles Laden der Energiespeicher und erhöht damit die Flexibilität des Einsatzes des Flugmoduls.

Die Positionierungseinrichtung(en) aufweisen eine oder mehrere Greifer- und/oder Auflagervorrichtungen. Diese können beispielsweise in der Art einer gabelförmigen Aufnahmevorrichtung (en) zur Aufnahme einer Tragwerksstruktur des Flugmoduls ausgebildet sein. Diese Aufnahmevorrichtung(en) können beispielsweise an einem Ende der Positionierungseinrichtung, vorzugsweise an einem äußeren Ende, angeordnet sein.

Vorzugsweise können die gabelförmigen Aufnahmevorrichtungen zur Aufnahme jeweils eines Tragwerksbalkens der Tragwerksstruktur ausgebildet sein.

Die gabelförmige Aufnahmevorrichtung kann den Tragwerksbalken von unten abstützen und einfassen und damit eine sichere Fixierung und einfache und exakte Ausrichtung der Tragwerksstruktur und damit des Flugmoduls ermöglichen.

Die Aufnahmevorrichtung kann optional ein oder mehrere Fixie-relement(e) zum Fixieren der Tragwerksbalken aufweisen. Die Fixierelemente können beispielsweise in Form von Bügeln ausgebildet sein, die nach Aufnahme der Tragwerksbalken in der gabelförmigen Aufnahmevorrichtung den Tragwerksbalken fest umschließen. Diese Verschlussfunktion kann ein unerwünschtes Lösen des Tragwerksbalkens von der gabelförmigen Aufnahmevorrichtung verhindern. Das Lösen der Verbindung erfolgt erst nach dem Entsichern des Verschlusses durch das / die Fixierelemente.

Gemäß weiteren Ausführungsvarianten können mehrere Positionierungseinrichtungen sternförmig und/oder in gleichmäßigem Abstand zueinander angeordnet sind. Beispielsweise können die Positionierungseinrichtungen von einem Mittelpunkt der Ladestation ausgehend sternförmig nach außen verlaufen. Die sternförmige Anordnung sowie die gleichmäßig beabstandete Anordnung ermöglichen eine gleichmäßige Verteilung der Masse des Flugmoduls auf der Ladestation und verbessern dadurch die Sicherheit der Ladestation.

Die konkrete Anordnung der Positionierungseinrichtungen ist von der Ausgestaltung des Flugmoduls, insbesondere dessen Tragwerksstruktur, abhängig. Weist die Tragwerksstruktur beispielsweise eine hexagonale Struktur mit sechs radial nach außen verlaufenden Tragwerksbalken auf, so können bevorzugt sechs Positionierungseinrichtungen vorgesehen sein, wobei jede Positionierungseinrichtung der Fixierung und Ausrichtung eines der sechs radialen Tragwerksbalken dient. Hierbei können die Positionierungseinrichtungen sternförmig nach außen verlaufen und gleichmäßig beabstandet zueinander angeordnet sein, indem zwei Positionierungseinrichtungen jeweils einen Winkel von 60° zueinander einschließen.

Gemäß verschiedenen Ausführungsvarianten kann die Ladestation, bevorzugt die Ladeeinrichtung und/oder die Positionierungseinrichtungen, einen Faserverbundwerkstoff aufweisen oder aus einem Faserverbundwerkstoff bestehen.

Bei dem Faserverbundwerkstoff kann es sich beispielsweise um einen faserverstärkten Kunststoff handeln, wie z. B. kohlefaser-, glasfaser- oder basaltfaserverstärkten Kunststoff.

Der Faserverbundwerkstoff kann spezielle textile Faserverstärkungselemente aufweisen. Die textile Faserverstärkung kann in Form von flächigen oder bandförmigen Geweben, Gestricken, Gewirken oder Geflechten in eine Kunststoffmatrix eingebracht sein.

Die Verwendung von Faserverbundwerkstoffen verwirklicht eine Verbesserung des Verhältnisses von der Stabilität und Masse der Ladestation bzw. der Bauelemente der Ladestation, da die aus Faserverbundwerkstoffen hergestellten Bauelemente eine niedrige Masse bei gleichzeitig guten bis sehr guten mechanischen Eigenschaften, wie z. B. Festigkeit, E-Modul, Schlagzähigkeit, aufweisen.

Die Ausleger der Positionierungseinrichtungen können entsprechend der Belastung, beispielsweise stab- oder balkenförmig ausgebildet sein und einen voll- oder Hohlprofilquerschnitt aufweisen.

Die Ausleger weisen ein Hohlprofil auf, in denen die elektrische Leitungen angeordnet sind So können darin Kabel der Ladeeinrichtung oder Signalleitungen der Kommunikationssysteme geführt werden.

Eine erfindungsgemäße Ladeverbundstation für senkrecht startende und landende Fluggeräte mit jeweils einem oder mehreren Energiespeichern weist mehrere der vorstehend beschriebenen Ladestationen auf.

Weisen die Fluggeräte jeweils ein vorstehend beschriebenes, modular handhabbares Flugmodul auf, kann die erfindungsgemäße Ladeverbundstation gemäß verschiedenen Ausführungsvarianten für die Flugmodule der senkrecht startende und landende Fluggeräte ausgebildet sein. Diese Ladeverbundstation für Flugmodule mit jeweils einem oder mehreren Energiespeichern weist ebenso mehrere der vorstehend beschriebenen Ladestationen auf.

Insofern dienen die obigen Ausführungen zur Erläuterung der erfindungsgemäßen Ladestation auch zur Beschreibung der erfindungsgemäßen Ladeverbundstation. Die Vorteile der erfindungsgemäßen Ladeverbundstation entsprechen denen der erfindungsgemäßen Ladestation und deren entsprechender Ausführungsvarianten.

Durch die Zusammenfassung mehrerer Ladestationen zu einer Ladeverbundstation besteht die Möglichkeit, die Energiespeicher mehrerer Fluggeräte bzw. Flugmodule gleichzeitig zu laden. Auch ist der Platzbedarf im Vergleich zu mehreren einzelnen Ladestationen verringert. Zudem ist lediglich eine einzige Infrastrukturanbindung, also eine einzige Anbindung an ein örtliches Stromversorgungsnetz erforderlich, um elektrische Energie für mehrere Ladestationen bereitzustellen.

Damit wird eine effiziente Ladetechnologie für die Aufladung der Fluggeräte bzw. Lademodule bereitgestellt.

Die einzelnen Ladestationen können neben der oder den Positionierungseinrichtungen und der Ladeeinrichtung jeweils eine Ladeplattform, vorzugsweise eine ebene Ladeplattform, aufweisen. Die Ladeplattform kann der Abstellung eines Fluggerätes oder der Ablage eines Flugmoduls dienen. Auf oder an der Ladeplattform können die Positionierungseinrichtung(en) und/oder die Ladeeinrichtung befestigt sein. Die Ladeplattform kann beispielsweise der räumlichen Ausdehnung des Fluggerätes bzw. Flugmoduls entsprechen.

Alternativ oder kumulativ zur Verwendung einer Ladeplattform können die Halterungen der Positioniereinrichtungen als Auflager für die Fluggeräte bzw. Flugmodule dienen.

Gemäß verschiedenen Ausführungsvarianten können die Ladestationen vertikal und/oder horizontal bewegbar, z. B. verfahrbar, sein. Dadurch kann vorteilhaft eine platzoptimierte Anordnung der Ladestationen untereinander mit und ohne der zu ladenden Fluggeräte bzw. Flugmodule erreicht werden.

Gemäß weiteren Ausführungsvarianten kann die Ladeverbundstation ein Gehäuse zum Umschließen der Ladestationen aufweisen. Beispielsweise kann das Gehäuse die Ladestation vollständig umschließen oder zumindest nach oben abdecken.

Das Gehäuse kann eine oder mehrere Öffnungen aufweisen. Eine oder mehrere Öffnungen nach oben können für den senkrechten An- oder Abflug des /der Fluggeräte bzw. des/der Flugmodule vorgesehen sein. Eine oder mehrere seitliche Öffnungen können für ein seitliches Aus- und Einfahren der Positioniereinrichtungen vorgesehen sein, um das Fluggerät bzw. das Flugmodul in eine startfähige Position zu bringen oder die Landung eines erwarteten Fluggeräts / Flugmoduls bereitzustellen.

Das Gehäuse dient dem Schutz der Ladestationen und der Fluggeräte bzw. Flugmodule vor Witterungs- und anderen äußeren, schädlichen Einflüssen.

Gemäß verschiedenen Ausführungsvarianten können die Ladestationen in einer Regalanordnung angeordnet sein, z. B. vertikal übereinander in einer oder mehreren horizontal nebeneinander angeordneten Reihen. Zur Aufnahme und zum Entlassen der Fluggeräte / Flugmodule können die Positioniereinrichtungen der Ladestationen horizontal ausgefahren werden und so einen vertikalen An- oder Abflug des Fluggerätes bzw. des Flugmoduls ermöglichen. Die Regalanordnung stellt eine besonders platzsparende Anordnungsvariante der Ladeverbundstation dar.

Die Regalanordnung kann durch ein Regalsystem realisiert sein, dass beispielsweise in der Art eines Paternosters ausgebildet sein kann. Nach Art eines Paternosters bedeutet, dass die Ladestationen in zwei vertikal nebeneinander angeordneten Reihen angeordnet sind und im Umlaufbetrieb - wie bei einem Paternoster - bewegt werden können. Am oberen und unteren Wendepunkt werden die Ladestationen in die jeweils andere Reihe umgesetzt.

Gemäß verschiedenen Ausführungsvarianten können die Ladestationen in einer Revolveranordnung angeordnet sein. Hierfür können die Ladestationen gemeinsam auf einer Grundplatte, z. B**.** einer kreisförmigen Grundplatte angeordnet sein, die um eine vorzugsweise vertikale Drehachse rotieren kann. Zur Aufnahme oder Entlassen bzw. zum Starten oder Landen der Fluggeräte / Flugmodule kann die betreffenden Ladestation mittels der drehbaren Grundplatte vor eine seitliche Öffnung oder unter eine obere Öffnung des Gehäuses der Ladeverbundstation gedreht werden, um das jeweilige Fluggerät / Flugmodul in eine startfähige Position zu verbringen oder die Landung des erwarteten Fluggeräts / Flugmoduls zu ermöglichen.

Die Revolveranordnung stellt eine weitere besonders platzsparende Anordnungsvariante der Ladeverbundstation dar.

Weitere Vorteile der vorliegenden Erfindung sind aus den Abbildungen sowie der zugehörigen Beschreibung ersichtlich. Es zeigen in schematischer Darstellung:
- Figur 1: eine Draufsicht einer erfindungsgemäßen Ladeverbundstation in Revolveranordnung mit seitlicher Öffnung;
- Figur 2: eine Draufsicht einer erfindungsgemäßen Ladeverbundstation in Revolveranordnung mit oberer Öffnung;
- Figur 3: perspektivische Ansicht einer erfindungsgemäßen Ladeverbundstation in Regalanordnung mit seitlichen Öffnungen;
- Figur 4: perspektivische Ansicht einer erfindungsgemäßen Ladeverbundstation in Regalanordnung mit oberer Öffnung;
- Figur 5: perspektivische Ansicht einer erfindungsgemäßen Ladeverbundstation in Sternanordnung auf Beleuchtungsmast.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kupplung.

In den Figuren werden identische oder ähnliche Elemente mit identischen Bezugszeichen versehen, soweit dies zweckmäßig ist.

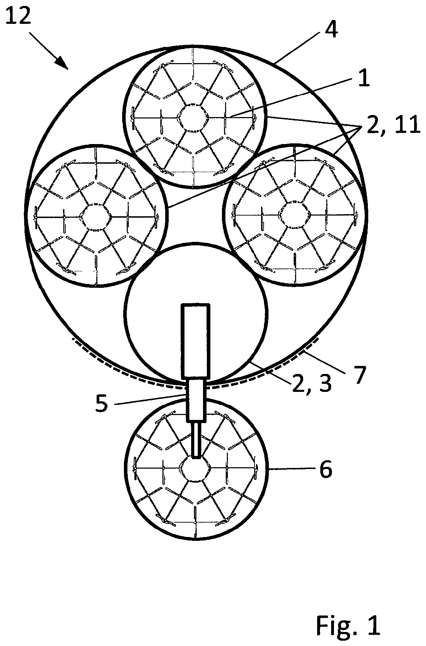

Figur 1 zeigt eine erste Variante einer erfindungsgemäßen Ladeverbundstation 12 für Flugmodule 1 in Revolveranordnung der einzelnen Ladestationen 2.

Die Ladeverbundstation 12 umfasst vier Ladestationen 2, die auf einer drehbaren Grundplatte 4 angeordnet sind. Die Ladestationen 2 weisen eine Ladeplattform zum Abstellen von jeweils einem Flugmodul 1 auf. In drei der vier Ladestationen 2 befindet sich jeweils ein eingeparktes und zu ladendes Flugmodul 1, wobei sich diese Ladestationen 2 in einer Parkposition 11 befinden.

Die Ladeverbundstation 12 weist ein Gehäuse mit einer seitlichen, verschließbaren Öffnung 7 auf.

Die vor der Öffnung 7 gelegene Ladestation 2 ist unbesetzt und befindet sich in einer Bereitschaftsposition 3 zur Aufnahme eines Flugmoduls 1 in die Ladestation 2 oder zur Abgabe eines Flugmoduls 1 aus der Ladestation 2.

Die Ladeverbundstation 12 weist in Nähe der Öffnung 7 eine Positioniereinrichtung 5 zum Halten, Fixieren und Ausrichten eines Flugmoduls 1 auf, die als eine teleskopierbare Vorrichtung ausgebildet ist und sich in Figur 1 in einer Ausfahrstellung befindet.

An der durch die Öffnung 7 ausgefahrenen Positioniereinrichtung 5 ist ein Flugmodul 1 in einer Start-Landeposition 6 gehalten, wobei das Flugmodul 1 aus dem Landeanflug von der Positioniereinrichtung 5 erfasst und ausgerichtet ist oder das Flugmodul 1 zum Starten bereitgehalten wird.

Das Flugmodul 1 kann mittels der Positioniereinrichtung 5 zu der in Bereitschaftsposition 3 befindlichen Ladestation 2 verbracht werden und ggf. auf der Ladeplattform der Ladestation 2 abgelegt werden.

Hier kann das Flugmodul 1 an eine Ladeeinrichtung (nicht gezeigt) der Ladestation 2 angeschlossen werden, um geladen zu werden.

Für eine elektrische Verbindung des Flugmoduls 1 mit der Ladeeinrichtung kann eine übliche elektrischer Steckvorrichtung vorgesehen sein oder es kann die Kupplungseinrichtung des Flugmoduls 1, welche zur Kupplung eines Transportmoduls vorgesehen ist, zugleich als elektrische Kupplungseinrichtung ausgebildet sein.

Zugleich weist die Ladeeinrichtung der Ladestation 2 ein entsprechendes Kupplungsgegenstück auf, welches mit der Kupplungseinrichtung des Flugmoduls 1 kuppelbar ist und die elektrische Energie an das Flugmodul 1 überträgt.

Alternativ kann das Laden des Flugmoduls 1 induktiv über Spulen erfolgen.

Während dessen kann die Grundplatte 4 gedreht werden, so dass eine benachbarte, bisher in der Parkposition 11 befindliche Ladestation 2 in die Bereitschaftsposition 3 vor die Öffnung 7 positioniert ist.

Mittels der Positioniereinrichtung 5 kann das bisher geparkte Flugmodul 1 von der nunmehr in Bereitschaftsposition 3 befindlichen Ladestation 2 entnommen werden und in die Start-Landeposition 6 für den Abflug verbracht werden.

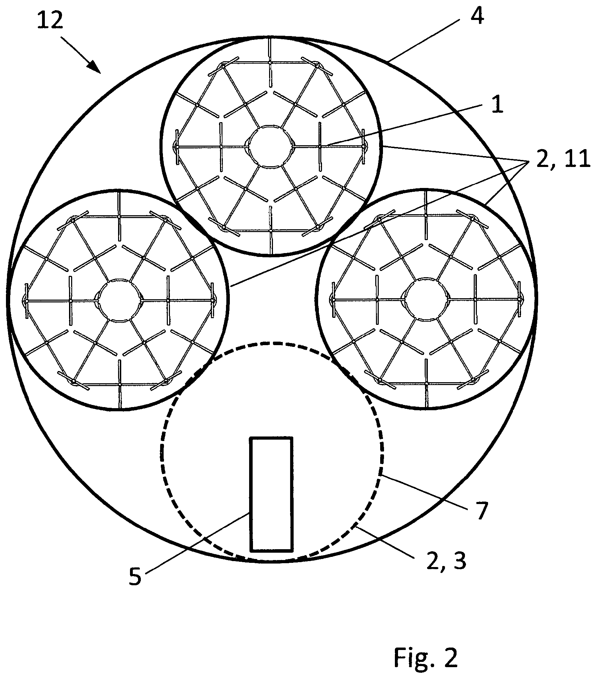

Figur 2 zeigt eine zweite Variante einer erfindungsgemäßen Ladeverbundstation 12 in Revolveranordnung ähnlich der Ladeverbundstation 12 nach Figur 1.

Nachfolgend werden daher nur die Unterschiede zur Ausführung nach der Figur 1 beschrieben.

Die Ladeverbundstation 12 weist ein Gehäuse mit einer oberen, verschließbaren Öffnung 7 im Dach des Gehäuses auf.

Die unmittelbar unter der Öffnung 7 gelegene Ladestation 2 ist unbesetzt und befindet sich in einer Bereitschaftsposition 3 zur Aufnahme eines Flugmoduls 1 in die Ladestation 2 oder zur Abgabe eines Flugmoduls 1 aus der Ladestation 2.

Die Ladeverbundstation 12 weist in Nähe der Öffnung 7 eine Positioniereinrichtung 5 zum Halten, Fixieren und Ausrichten eines Flugmoduls 1 auf, die als eine teleskopierbare oder stationäre Vorrichtung ausgebildet sein kann.

An der Positioniereinrichtung 5 kann ein Flugmodul 1 im Landeanflug erfasst, gehalten und ausgerichtet werden und in die in Bereitschaftsposition 3 befindliche Ladestation 2 verbracht werden (nicht gezeigt).

Hier kann das Flugmodul 1 an eine Ladeeinrichtung (nicht gezeigt) der Ladestation 2 angeschlossen werden, um geladen zu werden.

Zugleich oder nachfolgend kann die Grundplatte 4 gedreht werden, so dass eine benachbarte, bisher in der Parkposition 11 befindliche Ladestation 2 in die Bereitschaftsposition 3 unter die Öffnung 7 positioniert ist.

Mittels der Positioniereinrichtung 5 kann das bisher in der Parkposition 11 befindliche Flugmodul 1 von der nunmehr in Bereitschaftsposition 3 befindlichen Ladestation 2 erfasst werden und in eine Start-Landeposition 6 (nicht gezeigt) für den Abflug verbracht werden.

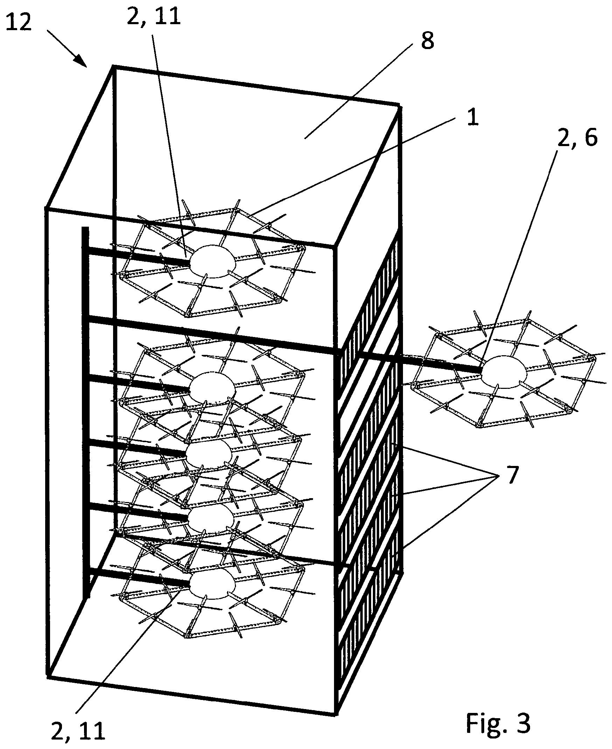

Figur 3 zeigt eine erfindungsgemäße Ladeverbundstation 12 für Flugmodule 1 in Regalanordnung mit seitlichen Öffnungen.

Die Ladeverbundstation 12 umfasst sechs Ladestationen 2, die in einem Regalsystem 8 in der Art eines Hochregallagers übereinander angeordnet sind. An jeder Ladestation 2 befindet sich jeweils ein eingeparktes und zu ladendes Flugmodul 1, das jeweils von einer Positioniereinrichtung 5 der Ladestationen 2 gehalten wird. Fünf der sechs Ladestationen 2 befinden sich in einer Parkposition 11.

Die Ladeverbundstation 12 weist ein Gehäuse mit sechs seitlichen, verschließbaren Öffnungen 7 auf, die jeweils einer Ladestation 2 zugeordnet sind.

Die Positioniereinrichtungen 5 der Ladestationen 2 sind hier als eine teleskopierbare Vorrichtung ausgebildet. In Figur 3 befindet sich die Positioniereinrichtung 5 einer Ladestation 2 in einer Ausfahrstellung.

An der durch eine zugehörige Öffnung 7 ausgefahrenen Positioniereinrichtung 5 ist ein Flugmodul 1 in einer Start-Landeposition 6 gehalten, wobei das Flugmodul 1 aus dem Landeanflug von der Positioniereinrichtung 5 erfasst und ausgerichtet ist oder das Flugmodul 1 zum Starten bereitgehalten wird.

Das Flugmodul 1 kann mittels der Positioniereinrichtung 5 in das Gehäuse eingefahren werden.

Die Positioniereinrichtung 5 kann mit einer Ladeeinrichtung (nicht gezeigt) verbunden sein, so dass das an der Positioniereinrichtung 5 gehaltene Flugmodul 1 unmittelbar geladen werden kann.

Auch hierbei kann für die elektrische Verbindung des Flugmoduls 1 mit der Ladeeinrichtung eine übliche elektrische Steckvorrichtung vorgesehen sein oder es kann die Kupplungseinrichtung des Flugmoduls 1 zugleich als elektrische Kupplungseinrichtung ausgebildet sein, die mit einem entsprechenden Kupplungsgegenstück der Ladeeinrichtung korrespondiert. Alternativ kann das Laden des Flugmoduls 1 induktiv über Spulen erfolgen.

Währenddessen kann ein parkendes, geladenes Flugmodul 1 einer anderen Ladestation 2 mittels der Positioniereinrichtung 5 dieser Ladestation 2 durch die zugehörige Öffnung 7 in die Start-Landeposition 6 zum Starten verbracht werden.

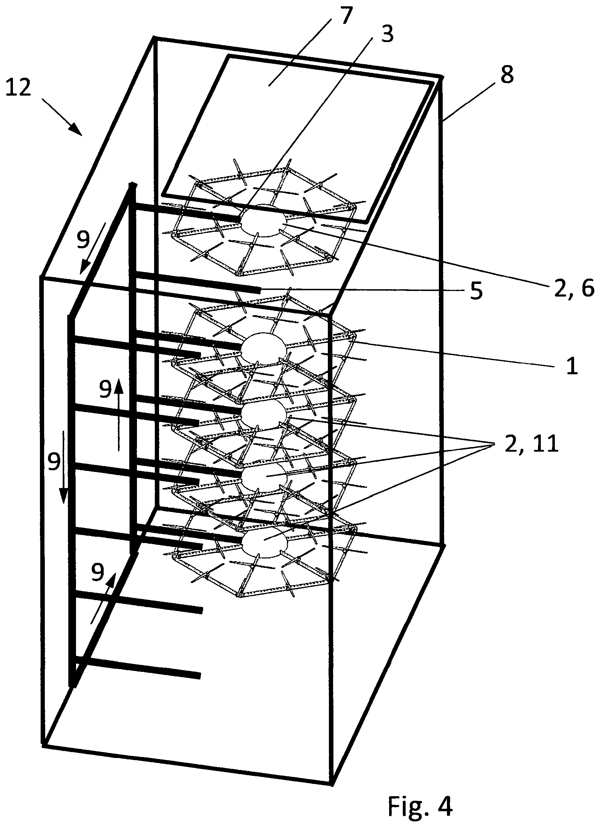

Figur 4 zeigt eine zweite Variante einer erfindungsgemäßen Ladeverbundstation 12 in Regalanordnung ähnlich der Ladeverbundstation 12 nach Figur 3.

Nachfolgend werden daher nur die Unterschiede zur Ausführung nach der Figur 3 beschrieben.

Die Ladeverbundstation 12 umfasst zwölf Ladestationen 2, die in einem zweireihigen Regalsystem 8 angeordnet sind. An fünf Ladestationen 2 befindet sich jeweils ein parkendes und im Ladevorgang befindliches Flugmodul 1 in einer Parkposition 11, das jeweils von einer Positioniereinrichtung 5 der Ladestationen 2 gehalten wird.

Die Ladeverbundstation 12 weist ein Gehäuse mit einer oberen, verschließbaren Öffnungen 7 auf.

Das Regalsystem 8 ist in der Art eines Paternosters ausgebildet, an dem die Ladestationen 2 beweglich und ortsveränderlich in Transportrichtung 9 befördert werden können.

Somit kann jede der Ladestationen 2 unter die Öffnung 7 positioniert werden und das von der Positioniereinrichtung 5 gehaltene Flugmodul 1 in die Start- Landeposition 6 verbracht werden. Oder ein erwartetes Flugmodul 1 kann mittels der Positioniereinrichtung 5 einer durch den Paternosterbetrieb nachgerückten und in Bereitschaftsposition 3 unter der Öffnung 7 befindlichen Ladestation 2 erfasst und ausgerichtet werden.

Der Ladevorgang der Flugmodule 1 kann wie vorstehend beschrieben erfolgen.

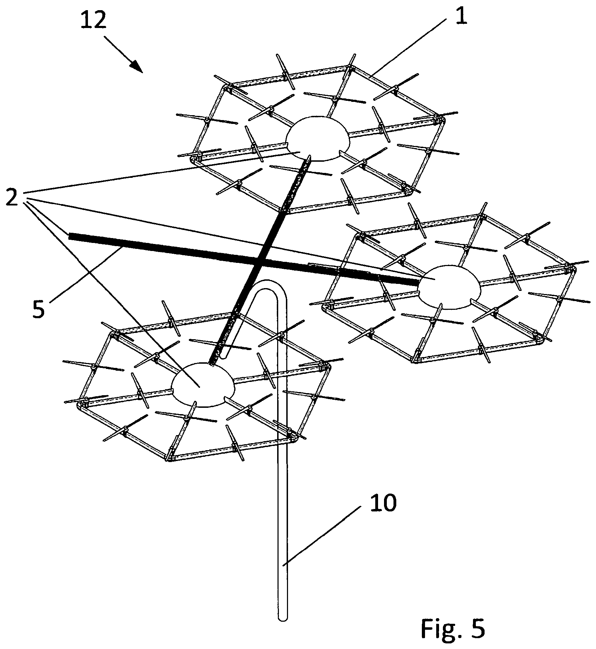

Figur 5 zeigt eine erfindungsgemäße Ladeverbundstation 12 mit vier sternförmig angeordneten Ladestationen 2, angeordnet auf einem Lichtmast 10 einer vorhandenen Infrastruktur.

An drei Ladestationen 2 befindet sich jeweils ein parkendes und zu ladendes Flugmodul 1, das jeweils von einer Positioniereinrichtung 5 der Ladestationen 2 gehalten und fixiert wird.

Die Positioniereinrichtungen 5 der Ladestationen 2 sind als eine teleskopierbare Vorrichtung ausgebildet.

Im ausgefahrenen Zustand der teleskopierbare Positioniereinrichtung 5 (nicht gezeigt) kann das Flugmodul in die Start-Landeposition 6 verbracht werden oder ein erwartetes Flugmodul kann mittels der Positioniereinrichtung 5 erfasst und ausgerichtet werden.

Der Ladevorgang der Flugmodule 1 kann wie vorstehend beschrieben erfolgen.

Die Figur 5 steht auch für eine Ausführung einer einzigen erfindungsgemäße Ladestation 2 mit nur einer Ladeeinrichtung und vier sternförmig angeordneten Positioniereinrichtungen 5 zum Halten, Fixieren und Ausrichten jeweils eines Flugmoduls 1, wobei mittels der Ladeeinrichtung jeweils nur ein Flugmodul 1 der vier Flugmodule geladen wird.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Wird beispielsweise eine Beziehung beschrieben, welche die Komponenten A, B und/oder C, enthält, kann die Beziehung die Komponenten A alleine; B alleine; C alleine; A und B in Kombination; A und C in Kombination; B und C in Kombination; oder A, B, und C in Kombination enthalten.

### Bezugszeichenliste

- 1: Flugmodul
- 2: Ladestation
- 3: Bereitschaftsposition der Ladestation
- 4: drehbare Grundplatte
- 5: Positioniereinrichtung
- 6: Start-Landeposition des Flugmoduls
- 7: Verschließbare Öffnung
- 8: Regalsystem
- 9: Bewegungsrichtung des Paternoster-Regalsystems
- 10: Lichtmast
- 11: Parkposition der Ladestation
- 12: Ladeverbundstation

## Patentansprüche

1. Ladestation (2), ausgebildet zum Laden eines oder mehrerer elektrischen Energiespeicher eines Flugmoduls (1) eines senkrecht startenden und landenden Fluggeräts,
wobei das Fluggerät das Flugmodul (1) für den Antrieb des Fluggeräts, welches mehrere an einer Tragwerksstruktur angeordnete Antriebseinheiten aufweist, und ein mit dem Flugmodul (1) an- und abkuppelbar verbundenes Transportmodul zum Transport von Personen und/oder Lasten umfasst, wobei das Flugmodul autark an oder auf der Ladestation (2) landet und, nachdem der/die Energiespeicher des Flugmoduls (1) elektrisch geladen ist/sind, wieder startet;
und wobei die Ladestation (2) aufweist:
- a) eine Ladeeinrichtung zur Übertragung elektrischer Energie an den oder die Energiespeicher des Flugmoduls (1), und
- b) eine oder mehrere Positionierungseinrichtung(en) (5) ausgebildet zum Halten, Fixieren und Ausrichten des Flugmoduls (1), wobei mittels der Positionierungseinrichtung(en) (5) die Tragwerksstruktur des Flugmoduls (1) in der Ladestation (2) erfasst wird und das Flugmodul (1) so ausgerichtet wird, dass eine Verbindung des an oder auf der Ladestation (2) gelandeten Flugmoduls (1) mit der Ladeeinrichtung ermöglicht wird, **dadurch gekennzeichnet, dass** die Positionierungseinrichtung(en) (5) einen oder mehrere Ausleger mit Greifer- und/oder Auflagervorrichtungen aufweist und die Ausleger ein Hohlprofil aufweisen, in denen die elektrischen Leitungen der Ladeeinrichtung angeordnet sind.

2. Ladestation (2) gemäß Anspruch 1, wobei die Ladeeinrichtung einen flexibel ausgebildeten Verbinder aufweist.

3. Ladestation (2) gemäß einem der vorstehenden Ansprüche, wobei die Ladeeinrichtung ein Kupplungsgegenstück aufweist, welches mit einer zur Kupplung eines Transportmoduls ausgebildeten Kupplungseinrichtung des Flugmoduls kuppelbar ist, so dass die elektrische Energie an den/die Energiespeicher des Flugmoduls über die Kupplungseinrichtung des Flugmoduls übertragen wird.

4. Ladestation (2) gemäß einem der vorstehenden Ansprüche, wobei die eine oder mehreren Greifer- und/oder Auflagervorrichtung(en) als eine oder mehrere gabelförmige Aufnahmevorrichtung(en) zur Aufnahme der Tragwerksstruktur des Flugmoduls (1) ausgebildet sind.

5. Ladestation (2) gemäß Anspruch 4, wobei die eine oder mehrere gabelförmige Aufnahmevorrichtung(en) zur Aufnahme jeweils eines Tragwerkbalkens der Tragwerksstruktur des Flugmoduls (1) ausgebildet sind.

6. Ladestation (2) gemäß Anspruch 4 oder Anspruch 5, wobei die gabelförmige Aufnahmevorrichtung(en) ein oder mehrere Fixierelement(e) zum Fixieren eines Tragwerksbalkens aufweisen.

7. Ladestation (2) gemäß einem der vorstehenden Ansprüche, wobei mehrere Positionierungseinrichtungen (5) sternförmig und/oder in gleichmäßigem Abstand zueinander angeordnet sind.

8. Ladestation (2) gemäß einem der vorstehenden Ansprüche, wobei die Ladestation (2) einen Faserverbundwerkstoff aufweisen oder aus einem Faserverbundwerkstoff bestehen.

9. Ladestation (2) gemäß Anspruch 8, wobei die Ladeeinrichtung und/oder die Positionierungseinrichtung(en) (5) einen Faserverbundwerkstoff aufweisen oder aus einem Faserverbundwerkstoff bestehen.

10. Ladestation (2) gemäß einem der vorstehenden Ansprüche, wobei die Ladestation (2) zur Anordnung auf einem Lichtmast, einer Säule oder einem Dach ausgebildet ist.

11. Ladeverbundstation (12) mit mehreren Ladestationen (2) nach einem der vorstehenden Ansprüche.

12. Ladeverbundstation (12) gemäß Anspruch 11, wobei die Ladestationen (2) vertikal und/oder horizontal bewegbar ausgebildet sind.

13. Ladeverbundstation (12) gemäß Anspruch 11 oder 12, wobei die Ladestationen (2) in einer Revolveranordnung angeordnet sind.

14. Ladeverbundstation (12) gemäß einem der Ansprüche 11 bis 13, wobei die Ladestationen (2) in einer Regalanordnung angeordnet sind.

15. Ladeverbundstation (12) gemäß Anspruch 14,wobei die Regalanordnung durch ein Regalsystem nach Art eines Paternosters gebildet ist.

## Claims

1. Charging station (2), designed for charging one or more electrical energy stores of a flight module (1) of a vertical take-off and landing aircraft, wherein the aircraft comprises the flight module (1) for the propulsion of the aircraft, which has several drive units arranged on a wing assembly, and a transport module for transporting persons and/or loads, which transport module can be coupled to and uncoupled from the flight module (1), wherein the flight module lands autonomously at or on the charging station (2) and, once the energy store(s) of the flight module (1) has/have been electrically charged, takes off again; and wherein the charging station (2) has:
- a) a charging device for transferring electrical energy to the energy store(s) of the flight module (1), and
- b) one or more positioning device(s) (5) designed to hold, fix and align the flight module (1), wherein the wing assembly of the flight module (1) is detected in the charging station (2) by means of the positioning device(s) (5) and the flight module (1) is aligned to enable a connection of the flight module (1) landed at or on the charging station (2) to the charging device,
**characterised in that** the positioning device(s) (5) have one or more arms with gripper and/or support devices and the arms have a hollow profile in which the electrical wiring of the charging device is arranged.

2. Charging station (2) according to claim 1, wherein the charging device has a flexibly designed connector.

3. Charging station (2) according to one of the preceding claims, wherein the charging device has a coupling counterpart which can be coupled to a coupling device of the flight module designed for coupling a transport module, so that the electrical energy is transmitted to the energy store(s) of the flight module via the coupling device of the flight module.

4. Charging station (2) according to one of the preceding claims, wherein the one or more gripper and/or support device(s) are designed as one or more fork-shaped receiving device(s) for receiving the wing assembly of the flight module (1).

5. Charging station (2) according to claim 4, wherein the one or more fork-shaped receiving device(s) are each designed to receive a wing assembly strut of the wing assembly of the flight module (1).

6. Charging station (2) according to claim 4 or claim 5, wherein the fork-shaped receiving device(s) has/have one or more fixing element(s) for fixing a wing assembly strut.

7. Charging station (2) according to one of the preceding claims, wherein several positioning devices (5) are arranged in a star shape and/or at a uniform distance from one another.

8. Charging station (2) according to one of the preceding claims, wherein the charging station (2) comprises a fibre-reinforced composite material or is made of a fibre-reinforced composite material.

9. Charging station (2) according to claim 8, wherein the charging device and/or the positioning device(s) (5) comprise a fibre-reinforced composite material or are made of a fibre-reinforced composite material.

10. Charging station (2) according to one of the preceding claims, wherein the charging station (2) is designed to be arranged on a lamp post, pillar or roof.

11. Combined charging station (12) with several charging stations (2) according to one of the preceding claims.

12. Combined charging station (12) according to claim 11, wherein the charging stations (2) are designed to be movable vertically and/or horizontally.

13. Combined charging station (12) according to claim 11 or 12,
wherein the charging stations (2) are arranged in a revolver arrangement.

14. Combined charging station (12) according to one of claims 11 to 13, wherein the charging stations (2) are arranged in a rack arrangement.

15. Combined charging station (12) according to claim 14, wherein the rack arrangement is formed by a rack system in the manner of a paternoster.

## Revendications

1. Station de recharge (2), configurée pour recharger un ou plusieurs accumulateur(s) d'énergie électrique d'un module de vol (1) d'un aéronef à décollage et atterrissage verticaux, sachant que
l'aéronef comprend le module de vol (1) pour la propulsion de l'aéronef, lequel présente plusieurs unités de propulsion disposées sur une structure porteuse, et un module de transport relié au module de vol (1) de manière à pouvoir y être accouplé et en être découplé, destiné au transport de personnes et/ou de charges, sachant que le module de vol atterrit de manière autonome contre ou sur la station de recharge (2) et redécolle après que le ou les accumulateurs d'énergie du module de vol (1) ont été rechargés électriquement ; et sachant que la
station de recharge (2) présente :
- a) un dispositif de recharge pour le transfert d'énergie électrique vers le ou les accumulateur(s) d'énergie du module de vol (1), et
- b) un ou plusieurs dispositif(s) de positionnement (5) configuré(s) pour maintenir, fixer et orienter le module de vol (1), sachant que la structure porteuse du module de vol (1) est saisie dans la station de recharge (2) au moyen du ou des dispositif(s) de positionnement (5), et que le module de vol (1) est orienté de manière à permettre une liaison du module de vol (1) atterri contre ou sur la station de recharge (2) avec le dispositif de recharge, **caractérisée en ce que** le(s) dispositif(s) de positionnement (5) présente(nt) une ou plusieurs potences avec des dispositifs de préhension et/ou d'appui, et que les potences présentent un profil creux dans lequel sont disposées les lignes électriques du dispositif de recharge.

2. Station de recharge (2) selon la revendication 1, dans laquelle le dispositif de recharge comprend un connecteur configuré flexible.

3. Station de recharge (2) selon l'une des revendications précédentes, dans laquelle le dispositif de recharge présente une contrepartie de couplage qui peut être couplée à un dispositif de couplage du module de vol configuré pour coupler un module de transport, de sorte que l'énergie électrique est transmise à l'/aux accumulateur(s) d'énergie du module de vol via le dispositif de couplage du module de vol.

4. Station de recharge (2) selon l'une des revendications précédentes, dans laquelle un ou plusieurs dispositif(s) de préhension et/ou d'appui est/sont configurés(s) sous la forme d'un ou plusieurs dispositif(s) de réception en forme de fourche pour recevoir la structure porteuse du module de vol (1).

5. Station de recharge (2) selon la revendication 4, dans laquelle un ou plusieurs dispositif(s) de réception en forme de fourche est/sont configuré(s) pour recevoir chacun une poutrelle de la structure porteuse du module de vol (1).

6. Station de recharge (2) selon la revendication 4 ou la revendication 5, dans laquelle le ou les dispositif(s) de réception en forme de fourche comprend/comprennent un ou plusieurs élément(s) de fixation pour fixer une poutrelle de structure porteuse.

7. Station de recharge (2) selon l'une des revendications précédentes, dans laquelle plusieurs dispositifs de positionnement (5) sont disposés en étoile et/ou mutuellement équidistants.

8. Station de recharge (2) selon l'une quelconque des revendications précédentes, dans laquelle la station de recharge (2) présente un matériau composite à fibres ou se compose d'un matériau composite à fibres.

9. Station de recharge (2) selon la revendication 8, dans laquelle le dispositif de recharge et/ou le(s) dispositif(s) de positionnement (5) présente(nt) un matériau composite à fibres ou se compose(nt) d'un matériau composite à fibres.

10. Station de recharge (2) selon l'une des revendications précédentes, dans laquelle la station de recharge (2) est configurée pour être placée sur un mât d'éclairage, une colonne ou un toit.

11. Station de recharge interconnectée (12) comprenant plusieurs stations de recharge (2) selon l'une des revendications précédentes.

12. Station de recharge interconnectée (12) selon la revendication 11, dans laquelle les stations de recharge (2) sont configurées pour être mobiles verticalement et/ou horizontalement.

13. Station de recharge interconnectée (12) selon la revendication 11 ou 12, dans laquelle les stations de recharge (2) sont agencées en révolver.

14. Station de recharge interconnectée (12) selon l'une des revendications 11 à 13,
dans laquelle les stations de recharge (2) sont agencées en étagères.

15. Station de recharge interconnectée (12) selon la revendication 14, dans laquelle l'agencement en étagères est formé par un système d'étagères de type paternoster.
